# DEMANDE DE BREVET EUROPEEN

(11) **EP 4 682 855 A1**
(43) Date de publication de la demande: **21.01.2026**
(21) Numéro de dépôt: 24306191.8
(22) Date de dépôt: 15.07.2024
(51) Int. Cl.: G09B 23/30

(54) **SIMULATEUR D'ARTHROSCOPIE DU POIGNET**

(71) Demandeur: Université de Franche-Comté, 25030 Besançon Cedex (FR); Centre Hospitalier Régional Universitaire de Besançon, 25000 Besançon (FR)
(72) Inventeur: KOEHLY, Axel, 25000 Besançon (FR); LOISEL, François, 25870 LES AUXONS (FR); COUSSENS, Camille, 25480 MISEREY-SALINES (FR); BILLOTTET, Benjamin, 25480 MISEREY-SALINES (FR)
(74) Mandataire: IPAZ

(57) **Abrégé**

L'invention concerne un simulateur d'arthroscopie du poignet (SAP) (10), d'un modèle physiologique d'individus considéré, ledit SAP comprenant les éléments synthétiques suivants : les os de la main, du poignet, une partie distale du radius (8) et une partie distale de l'ulna (9), au moins une partie, des ligaments de la main et, au moins une partie, des ligaments du poignet, au moins une partie, des tendons (17) de la main et, au moins une partie, des tendons (17) du poignet, et la peau (11) de la main et, au moins une partie, de la peau (11) du poignet. L'espace médio-carpien (13) du SAP est augmenté, d'au moins 100%, en distance, par rapport au modèle physiologique considéré.

## Description

### Domaine technique

La présente invention concerne l'arthroscopie du poignet.

La présente invention se rapporte, en particulier, au simulateur d'arthroscopie du poignet.

L'invention se rapporte, en particulier, à la formation des professionnels concernés, entre autres aux internes et chirurgiens débutants, pour l'apprentissage de l'anatomie arthroscopique du poignet et la triangulation dans cette articulation.

L'arthroscopie occupe aujourd'hui un rôle majeur dans le diagnostic et le traitement des lésions ostéoarticulaires. De nombreuses articulations tirent profit de cette technique « mini-invasive », tant en chirurgie programmée qu'en urgence.

La maitrise des gestes en arthroscopie est exigeante et passe par une longue phase d'apprentissage. Ces compétences se développent au fil des années de formation chirurgicale grâce aux cours pratiques sur cadavre et/ou sur simulateurs.

### État de la technique

Les internes et les jeunes médecins perçoivent des lacunes dans leur formation pour acquérir des compétences satisfaisantes en arthroscopie.

En France, la réforme du 3^{eme} cycle des études de médecine a fixé des objectifs précis en matière de simulation, notamment en chirurgie orthopédique. Les compétences spécifiques à acquérir sont clairement définies : avoir validé au laboratoire les principales voies d'abord des membres sur les sujets anatomiques et l'interventionnel simple en simulation sur maquettes ou numérique.

Le développement des simulateurs virtuels d'arthroscopie cette dernière décennie est une avancée majeure tant pédagogique qu'éthique. Ces dispositifs permettent aux chirurgiens de s'initier et de s'entrainer à l'arthroscopie de la hanche, du genou ou encore du coude mais restent difficile d'accès pour les internes et centres universitaires du fait de leur coût élevé.

Il est aujourd'hui requis de disposer de formations spécifiques nécessaires pour maitriser ces gestes et garantir la qualification des chirurgiens, assurant ainsi une utilisation plus sûre et améliorant la sécurité des patients.

Il est également à noter que l'enseignement sur une autre articulation (épaule ou genou par exemple) n'améliore pas les compétences en arthroscopie du poignet.

La problématique actuelle des internes et chirurgiens est qu'il n'existe pas de simulateur procédural dans les centres de formation pour s'initier et se perfectionner à l'arthroscopie du poignet. Il existe donc le besoin de proposer un simulateur d'arthroscopie du poignet permettant de s'expérimenter et de s'entrainer aux gestes basiques en arthroscopie de poignet.

Un tel simulateur permettra également la diffusion de méthodes d'enseignement ainsi que l'évaluation des connaissances théoriques et des aptitudes pratiques.

Un but de la présente invention est de remédier à au moins un des inconvénients de l'état de la technique.

Un autre but de l'invention est de proposer un simulateur d'arthroscopie du poignet :
- à faible coût, et/ou
- permettant de fournir un ressenti fidèle lors l'arthroscopie, et/ou
- ayant un rendu visuel fidèle d'un poignet, et/ou
- permettant de s'affranchir des méthodes d'enseignement actuelles sur cadavres, et/ou
- entièrement démontable et transportable sous une forme peu encombrante dans son état démonté.

### Exposé de l'invention

À cet effet, l'invention concerne un simulateur d'arthroscopie du poignet (SAP) d'un modèle physiologique d'individus considéré. Le SAP comprend les éléments synthétiques suivants :
- les os de la main, du poignet, une partie distale du radius et une partie distale de l'ulna,
- au moins une partie, des ligaments de la main et, au moins une partie, des ligaments du poignet,
- au moins une partie, des tendons de la main, de préférence au moins les tendons extenseurs de la main, de préférence encore uniquement les tendons extenseurs du poignet,
- la peau de la main, du poignet et, au moins une partie, de la peau de l'avant-bras.

De préférence, l'espace médio-carpien du SAP est augmenté, de préférence en distal, d'au moins 100%, en distance, par rapport au modèle physiologique considéré.

De préférence, l'espace médio-carpien du SAP est augmenté, par rapport au modèle physiologique considéré, de 50% ou plus, de préférence encore de 100% ou plus, de manière avantageuse de 150%, de manière particulièrement avantageuse de 200% ou plus et de manière davantage préférée de 250%.

De préférence, l'espace médio-carpien du SAP est augmenté, par rapport au modèle physiologique considéré, d'un pourcentage compris dans une des gammes consistant en une des combinaisons entre borne inférieure choisie parmi 50%, 100%, 150% ou 200% et une borne supérieure choisie parmi 250%, 200%, 150% ou 100%.

Selon l'invention, les termes « distal », « proximal », « médial », « latéral », correspondent au système de référence en anatomie.

De préférence, le modèle physiologique considéré peut être celui d'un sujet de référence ou standard. De préférence, le modèle physiologique considéré correspond à un poignet non pathologique de taille moyenne appartenant à un homme jeune avec une anatomie et une biomécanique « standard ».

De préférence, le SAP est démontable. De préférence, au moins une partie des os du carpe sont démontables du reste des os du SAP, c'est-à-dire des os de la main et de la partie distale du radius et de la partie distale de l'ulna.

Le SAP peut être considéré dans deux états : un état monté, correspondant à l'état dans lequel le SAP est utilisé lors de l'arthroscopie, et un état démonté, correspondant à l'état dans lequel le SAP est utilisé lors de son transport.

L'augmentation de l'espace médio-carpien conformément à l'invention permet d'améliorer la fidélité du ressenti lors de l'arthroscopie.

De préférence, l'augmentation de l'espace médio-carpien du SAP correspond à une distance supplémentaire, de préférence en distal, par rapport au modèle physiologique considéré, comprise entre 0,5 et 5 mm.

De préférence, l'augmentation de l'espace médio-carpien du SAP correspond à une distance supplémentaire, de préférence en distal, par rapport au modèle physiologique considéré, supérieure ou égale à 0,5 mm, de préférence encore à 1, de manière avantageuse à 1,5, de manière particulièrement avantageuse à 2, de manière tout particulièrement avantageuse à 2,5 et de manière préférée supérieure ou égale à 3 mm et/ou à une distance supplémentaire, de préférence en distal, par rapport au modèle physiologique considéré, inférieure ou égale à 5 mm, de préférence à 4,5, de préférence encore à 4, de manière avantageuse à 3,5, de manière particulièrement avantageuse à 2,5 et de manière préférée inférieure ou égale à 3 mm.

De préférence, l'espace scapho-lunaire du SAP est augmenté d'au moins 50%, de préférence en médio-latéral, en distance, par rapport au modèle physiologique considéré.

De préférence, l'espace scapho-lunaire est augmenté, par rapport au modèle physiologique considéré, de 50% ou plus, de préférence encore de 100% ou plus, de manière avantageuse de 150% ou plus et de manière préférée de 200%.

De préférence, l'espace scapho-lunaire du SAP est augmenté, par rapport au modèle physiologique considéré, d'un pourcentage compris dans une des gammes consistant en une des combinaisons entre borne inférieure choisie parmi 50%, 100% ou 150% et une borne supérieure choisie parmi 200%, 150% ou 100%.

L'augmentation de l'espace scapho-lunaire conformément à l'invention permet d'améliorer la fidélité du ressenti mécanique lors de l'arthroscopie.

L'augmentation de l'espace scapho-lunaire conformément à l'invention permet, en outre, de faciliter le montage du SAP.

L'augmentation de l'espace scapho-lunaire conformément à l'invention permet, en outre, d'améliorer l'intérêt pédagogique de l'arthroscopie, en particulier en permettant une meilleure visualisation du ligament scapho-lunaire.

De préférence, l'espace luno-triquétral du SAP est augmenté d'au moins 50%, de préférence en médio-latéral, en distance, par rapport au modèle physiologique considéré.

De préférence, l'espace luno-triquétral est augmenté, par rapport au modèle physiologique considéré, de 50% ou plus, de préférence encore de 100% ou plus, de manière avantageuse de 150% ou plus et de manière préférée de 200%.

De préférence, l'espace luno-triquétral du SAP est augmenté, par rapport au modèle physiologique considéré, d'un pourcentage compris dans une des gammes consistant en une des combinaisons entre borne inférieure choisie parmi 50%, 100% ou 150% et une borne supérieure choisie parmi 200%, 150% ou 100%.

L'augmentation de l'espace luno-triquétral conformément à l'invention permet d'améliorer la fidélité du ressenti mécanique lors de l'arthroscopie.

L'augmentation de l'espace luno-triquétral conformément à l'invention permet, en outre, de faciliter le montage du SAP.

L'augmentation de l'espace luno-triquétral conformément à l'invention permet, en outre, d'améliorer l'intérêt pédagogique de l'arthroscopie, en particulier en permettant une meilleure visualisation du ligament luno-triquétral.

De préférence, l'espace radio-carpien du SAP est augmenté d'au moins 50%, de préférence en proximal, en distance, par rapport au modèle physiologique considéré.

De préférence, l'espace radio-carpien est augmenté, par rapport au modèle physiologique considéré, de 50% ou plus, de préférence encore de 100% ou plus, de manière avantageuse de 150% ou plus et de manière préférée de 200%.

De préférence, l'espace radio-carpien du SAP est augmenté, par rapport au modèle physiologique considéré, d'un pourcentage compris dans une des gammes consistant en une des combinaisons entre borne inférieure choisie parmi 50%, 100% ou 150% et une borne supérieure choisie parmi 200%, 150% ou 100%.

L'augmentation de l'espace radio-carpien conformément à l'invention permet d'améliorer la fidélité du ressenti lors de l'arthroscopie.

De préférence, l'augmentation de l'espace radio-carpien du SAP correspond à une distance supplémentaire, de préférence en distal, par rapport au modèle physiologique considéré, comprise entre 0,5 et 5 mm.

De préférence, l'augmentation de l'espace radio-carpien du SAP correspond à une distance supplémentaire, de préférence en distal, par rapport au modèle physiologique considéré, supérieure ou égale à 0,5 mm, de préférence encore à 1, de manière avantageuse à 1,5, de manière particulièrement avantageuse à 2, de manière tout particulièrement avantageuse à 2,5 et de manière préférée supérieure ou égale à 3 mm et/ou à une distance supplémentaire, de préférence en distal, par rapport au modèle physiologique considéré, inférieure ou égale à 5 mm, de préférence à 4,5, de préférence encore à 4, de manière avantageuse à 3,5, de manière particulièrement avantageuse à 2,5 et de manière préférée inférieure ou égale à 3 mm.

De préférence, l'espace ulno-carpien du SAP est augmenté d'au moins 50%, de préférence en proximal, en distance, par rapport au modèle physiologique considéré.

De préférence, l'espace ulno-carpien est augmenté, par rapport au modèle physiologique considéré, de 50% ou plus, de préférence encore de 100% ou plus, de manière avantageuse de 150% ou plus et de manière préférée de 200%.

De préférence, l'espace ulno-carpien du SAP est augmenté, par rapport au modèle physiologique considéré, d'un pourcentage compris dans une des gammes consistant en une des combinaisons entre borne inférieure choisie parmi 50%, 100% ou 150% et une borne supérieure choisie parmi 200%, 150% ou 100%.

L'augmentation de l'espace ulno-carpien conformément à l'invention permet d'améliorer la fidélité du ressenti lors de l'arthroscopie.

Étonnamment, la reproduction de l'espace médio-carpien et/ou de l'espace scapho-lunaire et/ou de l'espace luno-triquétral et/ou de l'espace radio-carpien et/ou de l'espace ulno-carpien correspondant au modèle physiologique considéré, ou d'un espace médio-carpien et/ou d'un espace scapho-lunaire et/ou d'un espace luno-triquétral et/ou d'un espace radio-carpien et/ou d'un espace ulno-carpien inférieur à leur valeur minimale respective selon l'invention ne permet pas de restituer un ressenti optimal lors de l'arthroscopie fidèle à celui réalisé sur un le modèle physiologique. En effet, le passage de l'arthroscope et/ou du palpeur dans les espaces scapho-lunaire et/ou luno-triquétral et/ou radio-carpien et/ou ulno-carpien ne procure pas une rétroaction mécanique satisfaisante.

En outre, un espace médio-carpien et/ou un espace scapho-lunaire et/ou un espace luno-triquétral et/ou un espace radio-carpien et/ou un espace ulno-carpien supérieur à leur valeur maximale respective selon l'invention ne permet pas non plus de restituer un ressenti optimal lors de l'arthroscopie fidèle à celui réalisé sur un le modèle physiologique considéré. En effet, le passage de l'arthroscope et/ou du palpeur dans les espaces scapho-lunaire et/ou luno-triquétral et/ou radio-carpien et/ou ulno-carpien ne procure pas une rétroaction mécanique satisfaisante.

En outre, l'augmentation de l'espace médio-carpien et/ou de l'espace scapho-lunaire et/ou de l'espace luno-triquétral et/ou de l'espace radio-carpien et/ou de l'espace ulno-carpien, conformément à l'invention, contribue, en outre, de faciliter le montage du SAP.

De préférence, l'extrémité distale de l'ulna est rognée ou abaissée, par rapport au modèle physiologique considéré, pour créer un espace supplémentaire entre l'ulna et la première rangée des os du carpe.

De préférence, l'espace supplémentaire créé entre l'ulna et la première rangée des os du carpe n'existe pas dans le modèle physiologique considéré.

De préférence, l'espace supplémentaire créé entre l'ulna et la première rangée des os du carpe est ajouté à l'espace ulno-carpien.

De préférence, l'espace supplémentaire créé entre l'ulna et la première rangée des os du carpe correspond à une distance supplémentaire, de préférence en distal, comprise entre 0,5 et 5 mm.

De préférence, l'espace supplémentaire créé entre l'ulna et la première rangée des os du carpe correspond à une distance supplémentaire, de préférence en distal, supérieure ou égale à 0,5 mm, de préférence encore à 1, de manière avantageuse à 1,5, de manière particulièrement avantageuse à 2, de manière tout particulièrement avantageuse à 2,5 et de manière préférée supérieure ou égale à 3 mm et/ou à une distance supplémentaire, de préférence en distal, inférieure ou égale à 5 mm, de préférence à 4,5, de préférence encore à 4, de manière avantageuse à 3,5, de manière particulièrement avantageuse à 2,5 et de manière préférée inférieure ou égale à 3 mm.

De préférence, le complexe fibrocartilagineux triangulaire (TFCC), ou ligament triangulaire, faisant partie des ligaments du poignet, occupe, au moins en partie, de préférence en partie seulement, l'espace supplémentaire créé, lorsque le SAP dans monté.

De préférence, l'espace supplémentaire s'étend entre l'extrémité de l'ulna et les os de la première rangée du carpe en vis-à-vis de l'ulna, c'est-à-dire le pisiforme (Pis), le triquétrum (Tri) et le lunatum (Lun).

L'espace supplémentaire permet :
- de restituer un ressenti lors de l'arthroscopie fidèle à celui réalisé sur un le modèle physiologique considéré,
- de fournir un TFCC, de préférence présentant une épaisseur supérieure au TFCC au modèle physiologique considéré, contribuant à restituer un ressenti lors de l'arthroscopie fidèle à celui réalisé sur un le modèle physiologique considéré.

De préférence, la partie distale du radius et la partie distale de l'ulna comprennent des plots en saillie, formant, de préférence, des boutons osseux. De préférence, une extrémité distale de chaque plot constitue un ergot.

De préférence :
- les plots en saillie s'étendent au-delà du radius ou de l'ulna, ou s'étendent au-delà d'une surface externe du radius ou d'une surface externe de l'ulna, ou
- les plots sont en saillie du radius ou de l'ulna, ou sont en saillie d'une surface externe du radius ou d'une surface externe de l'ulna.

De préférence, les plots en saillie sont positionnés en regard ou niveau des zones de trajet respectives tendons/muscles du modèle physiologique considéré.

De préférence, les os du carpe comprennent des cavités ou évidements. De préférence, les cavités ou évidements forment des insertions tendineuses, ménagées dans les os du métacarpe.

De préférence, les cavités sont positionnées au niveau ou en regard des zones du trajet des tendons sur les métacarpes du modèle physiologique considéré.

Les cavités selon l'invention permettent de simplifier le montage du SAP et/ou de diminuer les coûts de production du SAP, tout en conservant l'intérêt pédagogique de l'arthroscopie.

De préférence, l'extrémité proximale de chaque tendon comprend une entaille ou une ouverture agencée pour introduire, en force, chaque plot respectif de la partie distale du radius et de la partie distale de l'ulna.

De préférence, l'extrémité distale de chaque tendon est agencée pour être insérée et immobilisée dans chaque cavité respective.

De préférence, l'extrémité distale de chaque tendon est immobilisée, dans chaque cavité respective, par collage. Toutefois, l'extrémité distale de chaque tendon peut être immobilisée, dans chaque cavité respective, par tout système de fixation adapté, par exemple par tout moyen de type cheville, tenon, goujon ou emboitage élastique (ou clips).

L'agencement des tendons et/ou l'agencement de l'accroche/insertion des tendons et/ou l'agencement des voies d'abord contribue à la restitution d'un ressenti et/ou de l'aspect du poignet, lors de l'arthroscopie, fidèle à celui réalisé sur un modèle physiologique considéré en reproduisant fidèlement le rendu mécanique par report des efforts et forces exercées sur les tendons lors du passage de l'arthroscope et des instruments et/ou en reproduisant fidèlement à l'observation faite, lors de l'arthroscopie.

De préférence, les plots en saillie et l'extrémité proximale des tendons et/ou l'entaille des tendons sont agencés pour que, après introduction d'un tendon considéré dans son plot respectif, l'extrémité distale de chaque plot soit en saillie par rapport au, ou au-delà du, tendon inséré.

De préférence, les plots en saillie et l'extrémité proximale des tendons et/ou l'entaille des tendons sont agencés pour que, après introduction d'un tendon considéré dans son plot respectif, l'extrémité distale de chaque plot forme une surface d'appui de la peau.

De préférence, les plots en saillie et l'extrémité proximale des tendons et/ou l'entaille des tendons sont agencés pour que, après introduction d'un tendon considéré dans son plot respectif, l'extrémité distale de chaque plot crée un espace entre :
- au moins une partie, des os du carpe, de la partie distale de l'ulna, de la partie distale du radius et des tendons, et
- la peau.

De préférence, l'espace créé entre l'au moins une partie, des os du carpe, la partie distale de l'ulna, la partie distale du radius et les tendons, et la peau n'existe pas dans le modèle physiologique considéré.

L'espace créé entre les os et la peau contribue, en outre, de procurer un ressenti, lors de l'arthroscopie, fidèle à celui réalisé sur un le modèle physiologique considéré. En effet, en reproduisant fidèlement le rendu mécanique par report des efforts et forces exercées sur les tendons lors du passage de l'arthroscope et des instruments.

Il peut être entendu par « instruments » : un palpeur, une fraise (ou « shaver » en anglais) ....

De préférence, le ligament scapho-lunaire comprend deux surfaces de contact opposées agencées pour épouser les surfaces articulaires du scaphoïde (Sca) et du lunatum (Lun).

De préférence, le scaphoïde (Sca) et le lunatum (Lun) comprennent chacun un trou osseux.

Selon une première alternative, le ligament scapho-lunaire comprend, de préférence, deux tiges en saillie par rapport à chacune des deux surfaces de contact respectives opposées.

De préférence, selon la première alternative, une extrémité de chacune des deux tiges du ligament scapho-lunaire est élargie.

De préférence, selon la première alternative, l'extrémité de chacune des deux tiges du ligament scapho-lunaire est agencée pour être insérée en force dans le trou osseux du scaphoïde (Sca) et dans un trou osseux du lunatum (Lun).

De préférence, selon une deuxième alternative, le ligament scapho-lunaire comprend uniquement ou consiste en les deux surfaces de contact opposées agencées pour épouser les surfaces articulaires du scaphoïde (Sca) et du lunatum (Lun).

Selon la deuxième alternative, les surfaces de contact opposées du ligament scapho-lunaire seront, de préférence, collées aux surfaces articulaires respectives du scaphoïde (Sca) et du lunatum (Lun) lors du montage du SAP.

De préférence, le ligament luno-triquétral comprend deux surfaces de contact opposées agencées pour épouser les surfaces articulaires du lunatum (Lun) et du triquétrum (Tri).

De préférence, le ligament luno-triquétral comprend, en outre, deux tiges en saillie par rapport à chacune des deux surfaces de contact respectives opposées.

De préférence, le triquétrum (Tri) comprend un trou osseux. De préférence, le lunatum (Lun) comprend un trou osseux supplémentaire.

De préférence, une extrémité de chacune des deux tiges du ligament luno-triquétral est élargie.

De préférence, l'extrémité de chacune des deux tiges du ligament luno-triquétral est agencée pour être insérée en force dans le trou osseux du triquétrum (Tri) et dans un trou osseux, de préférence dans le trou osseux supplémentaire, du lunatum (Lun).

De préférence, les ligaments radio-carpiens, comprennent le ligament radio-scapho-capitate, radio-lunaire court, radio-lunaire long, radio-scapho-lunaire, ulno-lunaire, ulno-triquétral et le complexe fibrocartilagineux triangulaire ou ligament triangulaire (TFCC).

De préférence, le ligament radio-scapho-capitate, radio-lunaire court, radio-lunaire long, radio-scapho-lunaire, ulno-lunaire et ulno-triquétral forment ou constituent ou sont agencés sous la forme d'une bandelette.

De préférence, la première rangée des os du carpe, la partie distale de l'ulna et la partie distale du radius comprennent des encoches ou sillons.

De préférence, les ligaments radio-carpiens et/ou, de préférence, chacune des deux extrémités des ligaments radio-carpiens, et/ou les encoches sont agencées pour que ligaments radio-carpiens soient insérés et immobilisés dans les encoches.

De préférence, les ligaments radio-carpiens (ou les deux extrémités de chaque ligament radio-carpien) sont immobilisés, dans chaque encoche respective, par collage. Toutefois, les ligaments radio-carpiens (ou les deux extrémités de chaque ligament radio-carpien) peuvent être immobilisés, dans chaque encoche respective, par tout système de fixation adapté, par exemple par tout moyen de type cheville, tenon, goujon ou emboitage élastique (ou clips).

De préférence, la peau présente une épaisseur, dite e1, sur une zone, dite z1, s'étendant entre les extrémités distales du radius et de l'ulna, vers les styloïdes du radius et de l'ulna puis vers l'extrémité latérale du scaphoïde (Sca) et l'extrémité médiale du triquétrum (Tri) jusqu'à l'extrémité distale du capitulum (Cap).

De préférence, la peau présente, en outre, une épaisseur, dite e2, sur chaque pourtour de voies d'abord.

De préférence, les voies d'abord sont ménagées dans la peau du poignet dans la zone z1.

De préférence, la peau, en outre, présente une épaisseur, dite e3, au regard des tendons 17 extenseurs.

De préférence, e1 est inférieure à e2. De préférence, e1 est au moins deux fois inférieure.

De préférence, e1 est inférieure à e3. De préférence, e1 est au moins deux fois inférieure à e3.

De préférence, e3 est supérieure ou égale à e2.

De préférence, le SAP comprend un socle agencé pour coopérer avec le SAP.

De préférence, le socle est agencé pour recevoir et immobiliser, de manière réversible, le SAP.

De préférence, le socle comprend, en outre, un système de fixation agencé pour immobiliser le socle sur un support.

De préférence, le système de fixation comprend un élément de stabilisation agencé pour être en prise avec une tranche du support et empêcher la rotation du socle.

De préférence, le SAP ou le socle comprend une pièce de liaison agencée pour être fixée, de manière réversible, sur la partie distale du radius et/ou sur la partie distale de l'ulna.

De préférence, la pièce de liaison est agencée pour être montée sur le socle de manière réversible.

De préférence, la partie distale du radius et la partie distale de l'ulna, le triquétrum (Tri) et le pisiforme (Pis), les os de la 2^{e} rangée du carpe, les métacarpes et les phalanges de chaque doigt long sont connectés rigidement entre eux sans articulation.

De préférence, la peau comprend deux pièces.

De préférence, la peau comprend une partie distale et une partie proximale.

De préférence, la partie distale s'étend depuis les phalanges distales jusqu'aux os du métacarpe, de préférence jusqu'à une extrémité proximale des os du métacarpe.

De préférence, la partie proximale, s'étend depuis les os du métacarpe jusqu'à l'extrémité proximale du SAP.

De préférence, la peau comprend une jonction entre la partie distale et la partie proximale de la peau est coronale et se situe au niveau des os du métacarpe.

La jonction entre la partie distale et la partie proximale de la peau permet, de préférence, de faciliter le montage du SAP en montant les éléments du SAP situés en proximal de la jonction après le montage de la partie distale de la peau.

### Brève description des FIGURES

L'invention sera mieux comprise à la lecture de la description qui va suivre, donnée uniquement à titre d'exemple non limitatif et faite en se référant aux dessins annexés sur lesquels :
- la FIGURE 1 est une représentation schématique, en vue dorsale, des os du métacarpe, d'une partie distale de l'ulna et d'une partie distale du radius, de certains ligaments du carpe et d'une partie des os du métacarpe du SAP selon l'invention,
- la FIGURE 2 est une représentation schématique, en vue dorsale, de la région d'intérêt du poignet comprenant certains des os du métacarpe, d'une partie distale de l'ulna et d'une partie distale du radius et de certains ligaments du carpe du SAP selon l'invention,
- la FIGURE 3 est une représentation schématique des ligaments scapho-lunaire (à gauche) et luno-triquétral (à droite) du SAP selon l'invention,
- la FIGURE 4 est une représentation schématique des boutons osseux des parties distales du radius et de l'ulna,
- la FIGURE 5 est une représentation schématique d'un bouton osseux dans lequel est inséré un tendon,
- la FIGURE 6 est une représentation schématique d'une insertion tendineuse d'un os du métacarpe,
- la FIGURE 7 est une représentation schématique, en vue dorsale, des os du SAP et des tendons du SAP en vue de côté,
- la FIGURE 8 est une représentation schématique du SAP et de l'élément de liaison en vue dorsale,
- la FIGURE 9 est une représentation schématique de la partie distale du socle en vue de biais,
- les FIGURES 10 et 11 sont des représentations schématiques du SAP et du socle en vue de côté.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée des FIGURES

Selon le mode réalisation non limitatif, le SAP 10 est une pièce anatomique conçue à partir d'un scanner non injecté de poignet non pathologique. Selon le mode de réalisation, le poignet à partir duquel est conçu le SAP 10, est celle d'un homme jeune, typiquement d'une trentaine d'années, de taille moyenne ayant une anatomie et une biomécanique « standard » qui est dit sujet de référence ou modèle physiologique considéré.

La modélisation du modèle physiologique est effectuée à partir de la segmentation d'un poignet scanné appartenant à un volontaire sain. Celui-ci est modifié afin de reproduire les conditions opératoires et s'adapter à la simulation. L'analyse ou la numérisation du volontaire sain ne permet pas de modéliser l'ensemble des ligaments/tendons qui ont dû être conçus.

La modélisation, opérée par un logiciel adapté a permis d'isoler les différentes structures anatomiques et de créer un fichier 3D à partir de coupes 2D du scanner. Une conception assistée par ordinateur (CAO), mise en oeuvre à partir du fichier 3D, a permis la conception du SAP 10.

Selon le mode de réalisation non limitatif, la majorité, de préférence, l'ensemble des éléments du SAP 10 sont conçus par impression 3D.

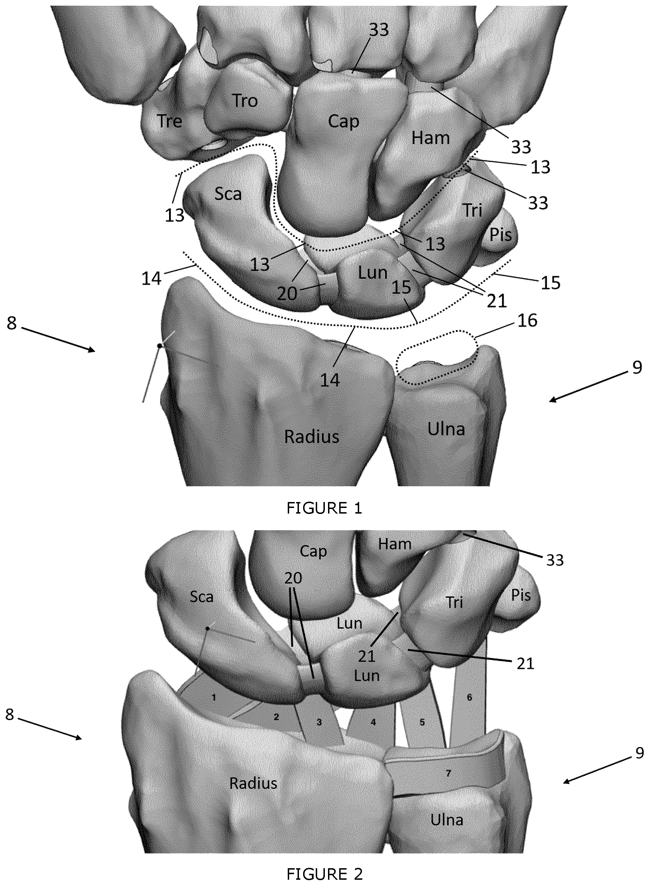

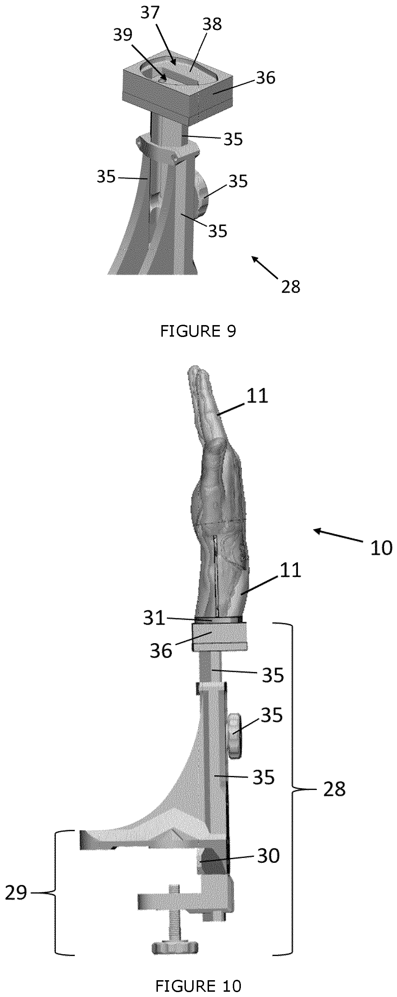

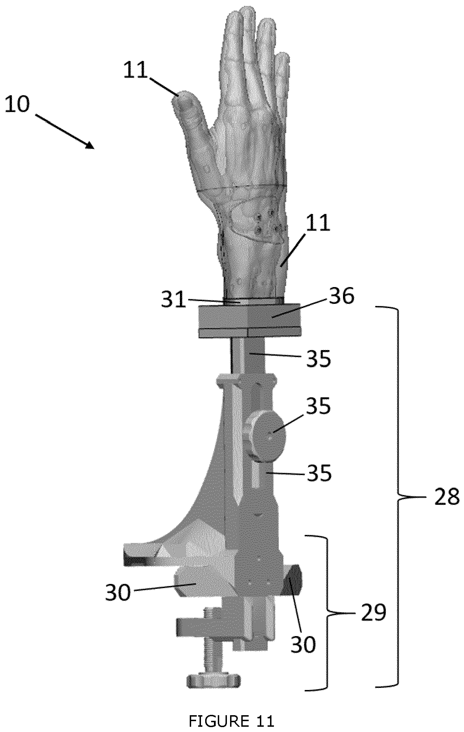

En référence aux FIGURES 1 à 11, le SAP 10 comprend les éléments synthétiques suivants :
- les os de la main, du poignet, une partie distale du radius 8 et une partie distale de l'ulna 9,
- au moins une partie, des ligaments de la main et, au moins une partie, des ligaments du poignet,
- au moins une partie, des tendons 7 de la main et, au moins une partie, des tendons 17 du poignet,
- la peau 11 de la main et, au moins une partie, de la peau 11 du poignet.

Le SAP 10 est démontable de sorte à être transporté facilement. Aussi, les os, ligaments, tendons et le revêtement cutané (la peau) 11 comprennent des moyens d'assemblage réversibles.

Au bloc opératoire, le patient est généralement installé en décubitus dorsal, le bras placé sur une table, la main tractée au zénith, face dorsale du poignet placée vers l'opérateur avec les métacarpes dans l'axe de l'avant-bras.

Le poignet scanné étant en légère extension et en inclinaison ulnaire, celui-ci est corrigé en inclinaison et extension neutre pour reproduire la posture du membre au bloc opératoire.

### Les os du SAP

En référence, en particulier aux FIGURES 1, 2, 4 et 7, le SAP 10 comprend les os de la main 34 (phalanges distale, intermédiaires et proximales) et les os du métacarpe. Le SAP 10 comprend également les os du carpe. Enfin, le SAP 10 comprend la partie distale du radius 8 et la partie distale de l'ulna 9.

Les os sont imprimés, par une imprimante 3D, en résine dure de couleur blanche afin de reproduire leur apparence et leur texture. A titre d'exemple non limitatif, les os sont conçus à partir de « White resin » fournie par la société Fomlabs^{®}.

Il a été découvert qu'une augmentation de l'espace médio-carpien 13 du SAP 10 de 100% ou plus en distance, en distal, par rapport au modèle physiologique considéré, permet d'améliorer, durant l'arthroscopie, la rétroaction mécanique et donc le ressenti.

Selon le mode de réalisation, l'espace est augmenté en distance, c'est-à-dire que la distance entre la 2^{eme} rangée des os du carpe (trapèze (Tre), trapézoïde (Tro), capitatum (Cap) et hamatum (Ham)) et la première rangée (scaphoïde (Sca), lunatum (Lun), triquetrum (Tri) et pisiforme (Pis)) est augmentée par rapport à la distance du modèle physiologique considéré.

Selon le mode de réalisation, la distance est augmentée en distal, c'est-à-dire que la 2^{eme} rangée est décalée en distal par rapport au modèle physiologique considéré.

En pratique, l'augmentation de l'espace médio-carpien 13 du SAP 10 de 100% en distance correspond à un espace de 2 mm entre la deuxième et la première rangée des os du carpe.

L'espace médio-carpien peut être défini comme s'étendant entre une courbe comprenant les surfaces articulaires des os de la première rangée du carpe (avec les os de la deuxième rangée du carpe) et une courbe comprenant les surfaces articulaires des os de la deuxième rangée du carpe (avec les os de la première rangée du carpe).

A titre d'exemple préféré mais non limitatif, l'augmentation de l'espace médio-carpien 13 du SAP 10 est de 200% en distance selon le mode de réalisation. Une telle augmentation de 200% en distance de l'espace médio-carpien 13 du SAP 10 correspond à un espace de 3 mm entre la deuxième et la première rangée des os du carpe.

De manière équivalente, une augmentation de l'espace radio-ulno-carpien 14, 15 de 50% ou plus en distance, et en proximal, par rapport au modèle physiologique considéré, procure le même effet, c'est-à-dire d'améliorer, durant l'arthroscopie, le ressenti et la fidélité du rendu procuré par le SAP 10 à l'utilisateur.

L'espace radio-ulno-carpien peut être définie comme s'étendant entre une courbe comprenant la perpendiculaire au grand axe du radius passant par la surface articulaire radiale et la perpendiculaire au grand axe du radius passant par la surface articulaire ulnaire et une courbe comprenant les surfaces articulaires des os de la première rangée du carpe (avec les os de la deuxième rangée du carpe).

En pratique, l'augmentation de l'espace l'espace radio-ulno-carpien 14, 15 du SAP 10 de 50% en distance correspond à un espace de 1,5 mm entre l'extrémité distale de l'ulna (ou la surface articulaire du complexe fibrocartilagineux triangulaire ou ligament triangulaire TFCC 7 avec les os de la première rangée du carpe en vis-à-vis) et l'extrémité du radius (ou la surface articulaire du radius avec les os de la première rangée du carpe en vis-à-vis) d'une part et la première rangée des os du carpe d'autre part.

A titre d'exemple préféré mais non limitatif, l'augmentation de l'espace médio-carpien 13 du SAP 10 est de 100% en distance selon le mode de réalisation. Une telle augmentation de 100% en distance de l'espace médio-carpien 13 du SAP 10 correspond à un espace de 2 mm entre l'extrémité distale de l'ulna et l'extrémité du radius d'une part et la première rangée des os du carpe d'autre part.

Selon un mode de réalisation avantageux, le SAP 10 comprend, en outre, une augmentation l'espace scapho-lunaire 21 et/ou de l'espace luno-triquétral 21, par rapport au modèle physiologique considéré. Ce mode de réalisation offre une contribution supplémentaire à l'amélioration du ressenti et de la fidélité du rendu procuré par le SAP 10 à l'utilisateur.

De manière avantageuse, l'extrémité distale de l'ulna 9 est abaissée, par rapport au modèle physiologique considéré, pour créer un espace supplémentaire 16 entre l'extrémité distale de l'ulna 9 et la première rangée des os du carpe (c'est-à-dire entre la surface articulaire du TFCC 7 avec les os de la première rangée du carpe en vis-à-vis). Cet abaissement permet de simplifier le montage du SAP 10, en facilitant le placement du TFCC 7 lors du montage. Cet abaissement contribue, en outre, à procurer un meilleur ressenti et une meilleure apparence lors de l'arthroscopie à l'utilisateur du SAP 10.

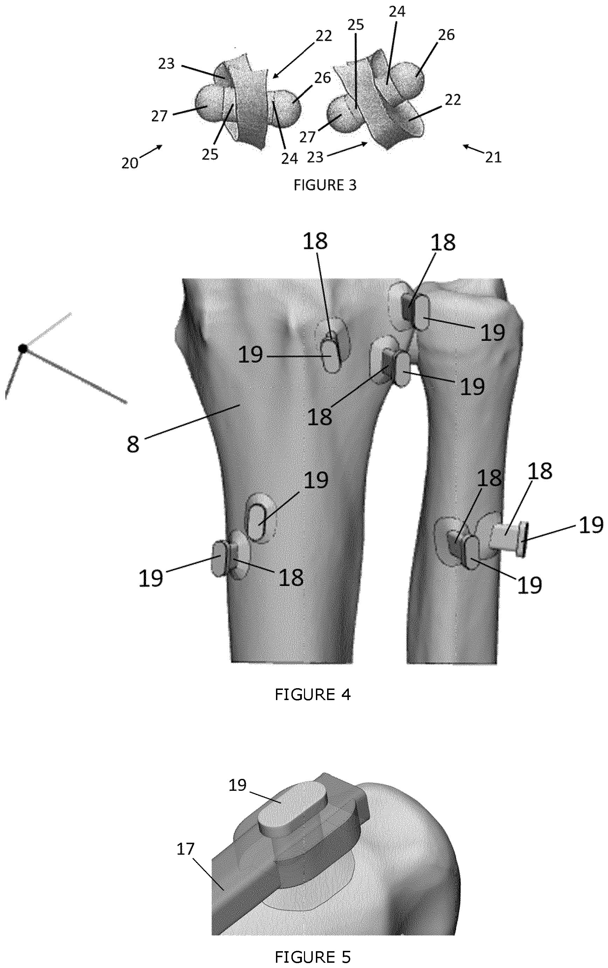

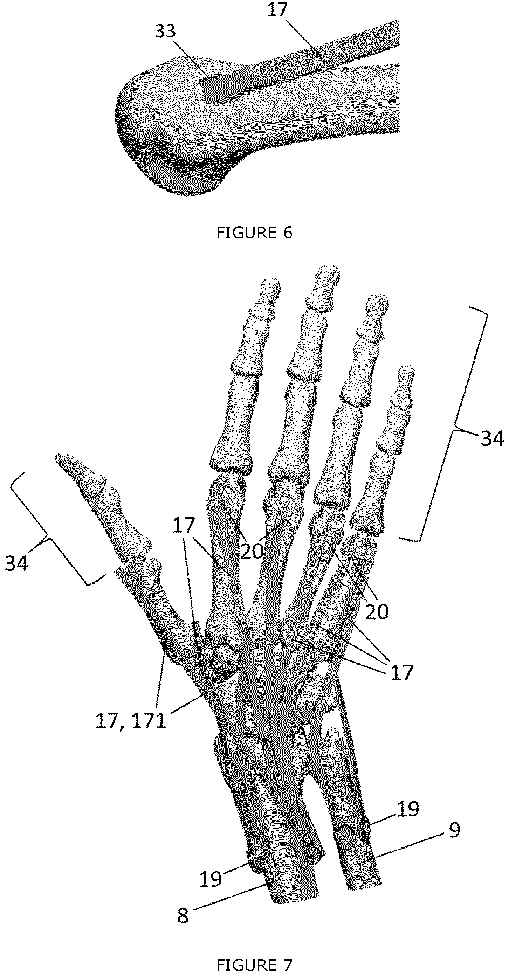

En référence aux FIGURES 4 et 7, et contrairement au modèle physiologique considéré :
- la partie distale du radius 8 et la partie distale de l'ulna 9 sont avantageusement connectés rigidement entre elles sans articulation,
- le triquétrum (Tri) et le pisiforme (Pis) sont connectés rigidement entre eux sans articulation,
- les os de la 2^{e} rangée du carpe sont connectés rigidement entre eux sans articulation,
- les os de la 2^{e} rangée du carpe sont connectés rigidement et sans articulation avec les os du métacarpe respectifs, et
- les os du métacarpe sont connectés rigidement et sans articulation avec les phalanges 34 de chaque doigt long respectives.

Cet aspect permet de faciliter le montage/démontage du SAP 10 et de diminuer le temps de montage/démontage du SAP 10.

En pratique, les connexions rigides sans articulation entre les os telles que décrites ci-dessus sont issues de l'impression 3D d'un seul bloc :
- d'un élément, noté élément 1, formant un seul bloc constitué de la partie distale du radius 8 et de la partie distale de l'ulna 9,
- d'un élément, noté élément 2, formant un seul bloc constitué du triquétrum (Tri) et du pisiforme (Pis) et
- d'un élément, noté élément 3, formant un seul bloc constitué des os de la 2^{e} rangée du carpe, des os du métacarpe et des phalanges 34.

Aussi, cet aspect de l'invention permet également de simplifier la fabrication du SAP 10, et réduire le temps et les coûts de fabrication du SAP 10.

En référence aux FIGURES 4 et 7, la partie distale du radius 8 et la partie distale de l'ulna 9 comprennent des plots 18 en saillie, formant des boutons osseux 18. Une partie proximale des tendons 17 de la main est agencée pour coopérer, de préférence en étant insérée dans les plots 18, et être immobilisée sur les plots 18. Bien que, de prime abord, la création d'insertions dans, ou l'immobilisation directe de l'extrémité proximale des tendons 17 de la main directement sur la partie distale du radius 8 et la partie distale de l'ulna 9 paraisse préférable, il a été observé que les boutons osseux 18 contribuent à l'amélioration du ressenti et de la fidélité du rendu procuré par le SAP 10 à l'utilisateur lors de l'arthroscopie. En outre, le montage/démontage du SAP 10 est également simplifié.

Les plots 18 comprennent à leur extrémité distale 19 (c'est-à-dire que chaque extrémité distale de chaque plot 18 constitue, comprend ou forme un ergot 19). Les ergots 19 permettent d'empêcher que les tendons 17 (l'extrémité proximale des tendons 17) sortent des plots 18 lors de l'arthroscopie.

Les os du métacarpe du SAP 10 comprennent des cavités ou évidements 33, formant des insertions tendineuses 33. Les cavités 33 sont ménagées dans les os du métacarpe. Une partie distale des tendons 17 de la main est agencée pour coopérer, de préférence en étant insérée dans les plots 18, et être immobilisée dans les insertions 33.

La première rangée des os du carpe, la partie distale de l'ulna 9 et la partie distale du radius 8 comprennent des encoches ou sillons dans lesquelles chacun des deux extrémités des ligaments 17 radio-carpiens sont agencés pour être insérés et immobilisés.

De manière avantageuse, les plots 18 sont agencés pour que, après introduction d'un tendon 17 de la main considéré dans son plot 18 respectif, l'extrémité distale 19 de chaque plot 18 soit en saillie, par rapport au tendon 17 inséré, pour former une surface d'appui de la peau 11. La surface d'appui de la peau 11 créée permet, contrairement au modèle physiologique considéré, d'éloigner la peau 11 des tendons 17 et des os. Ainsi un espace, n'existant pas dans le modèle physiologique considéré, est créé entre, d'une part, au moins une partie, des os du carpe, de la partie distale de l'ulna 9, de la partie distale du radius 8 et des tendons 17 de la main et, d'autre part, la peau 11. L'espace créé contribue à l'amélioration de l'assemblage des pièces, du ressenti et de la fidélité du rendu procuré par le SAP 10 à l'utilisateur lors de l'arthroscopie.

### Les tendons du SAP

En référence, entre autres, à la FIGURE 7, sont décrits les tendons 17 du SAP 10.

Selon le mode de réalisation, le SAP 10 comprend uniquement les tendons extenseurs 17 de la main. Cela permet de limiter les coûts de fabrication du SAP 10. Cela permet également de simplifier le montage et de diminuer le temps de montage/démontage du SAP 10. Toutefois, l'invention n'exclut pas que le SAP 10 comprennent les tendons fléchisseurs de la main.

Les tendons 17, comme, de préférence, l'ensemble des parties molles du SAP 10, sont réalisés en résine souple élastique. Selon le mode de réalisation non limitatif, la résine est une résine siliconée, en particulier du silicone présentant une dureté shore comprise entre 80 et 30. La résine utilisée selon le mode de réalisation non-limitatif présente une dureté de 50 shore.

De manière avantageuse, les tendons extenseurs 17 ont été allongés, par rapport au modèle physiologique considéré. Il a été observé qu'une reproduction fidèle des tendons extenseurs 17 (de la longueur des tendons extenseurs 17) ajoutée une tension excessive sur le poignet nuisant au rendu lors de l'arthroscopie. Afin d'éviter que le poignet ne se tende trop en extension lors de l'arthroscopie, les tendons extenseurs 17 ont été allongés, en longueur, d'un pourcentage compris entre 0% et 50% par rapport au modèle physiologique (c'est-à-dire que les tendons extenseurs 17 présente une longueur comprise entre 10 cm et 20 cm). L'allongement des tendons extenseurs 17, par rapport à la longueur des tendons du modèle physiologique considéré, tel que décrit, contribue à l'amélioration du ressenti et à la fidélité du rendu procuré par le SAP 10 à l'utilisateur lors de l'arthroscopie.

De manière avantageuse, et contrairement au modèle physiologique où les tendons extenseurs s'insèrent physiologiquement sur la phalange moyenne et distale, les tendons extenseurs 17 ont été insérés sur les métacarpes selon l'invention. Une telle configuration permet de simplifier le montage du SAP 10 et de diminuer les coûts de fabrication du SAP 1 sans changer le trajet physiologique des tendons (et donc en conservant un rendu et un intérêt pédagogique optimaux lors de l'arthroscopie.

De manière avantageuse, et contrairement au modèle physiologique considéré, les tendons 17 présentent une courbure « native » (c'est-à-dire ont été imprimés de sorte à présenter une courbure intrinsèque) afin qu'ils suivent la courbure physiologique du poignet. Intuitivement, les tendons 17 auraient été conçus conformément au modèle physiologique considéré. Toutefois, une reproduction formelle des tendons 17 du modèle physiologique considéré ne procure pas une restitution conforme du ressenti effectivement observé en pratique. Aussi, l'agencement des tendons 17 tel que décrit ci-dessus contribue à l'amélioration du ressenti et à la fidélité du rendu procuré par le SAP 10 à l'utilisateur lors de l'arthroscopie.

Avantageusement, afin d'améliorer l'amélioration du ressenti et la fidélité du rendu procuré par le SAP 10 à l'utilisateur lors de l'arthroscopie la largeur des tendons 17 est conforme à celle du modèle physiologique considéré mais l'épaisseur est augmentée.

Avantageusement, afin d'améliorer l'amélioration du ressenti et la fidélité du rendu procuré par le SAP 10 à l'utilisateur lors de l'arthroscopie, la conformation sectionnelle ou la forme des tendons 17 du SAP 10 est rectangulaire à bord émoussé.

Selon le mode de réalisation, le tendon 171 long extenseur du pouce est superficialisé et allongé. Cette caractéristique permet de faciliter le montage du SAP 10 en limitant les interactions et conflits du long extenseur du pouce 171 avec les autres tendons extenseurs 17 lors du montage du SAP 10.

De manière avantageuse, le tendon 17 des muscles extenseurs communs, le tendon 17 de l'extenseur propre du 5^{e} doigt au niveau du radius 8 et du rétinaculum sont fusionnés pour améliorer la reproductibilité anatomique du SAP 10. En outre, cette caractéristique permet de projeter plus facilement la réflexion du tendon 17 dans le rétinaculum et de simplifier l'impression 3D du SAP 10.

De manière avantageuse, l'extenseur propre du 2^{e} doigt n'est pas segmenté afin de simplifier l'impression 3D du SAP 10.

L'extrémité proximale de chaque tendon 17 comprend une entaille ou une ouverture agencée pour introduire chaque plot 18 respectif. L'entaille des tendons 17 constitue ou forme une ouverture traversante. Avantageusement, l'entaille de chaque tendon 17 est introduite en force dans chaque plot 18 respectif.

L'extrémité proximale des tendons 17 et/ou l'entaille des tendons est agencée pour que, après introduction d'un tendon 17 considéré dans son plot 18 respectif, l'extrémité distale 19 de chaque plot 18 soit en saillie, par rapport au tendon 17 inséré, pour former la surface d'appui de la peau 11 sur l'extrémité distale 19 des plots 18.

L'extrémité distale de chaque tendon 17 est agencée pour être insérée et immobilisée dans chaque cavité 33 respective. Selon le mode de réalisation non limitatif, l'extrémité distale de chaque tendon 17 est immobilisée, de manière irréversible ou de manière réversible, dans chaque cavité 33 respective.

A titre d'exemple non-limitatif, l'extrémité distale de chaque tendon 17 peut être immobilisée, de manière irréversible, par collage dans chaque cavité 33 respective.

A titre d'exemple non-limitatif, l'extrémité distale de chaque tendon 17 peut être immobiliser, de manière réversible, par assemblage, insertion ou enchâssement dans chaque cavité 33 respective.

Avantageusement, une épaisseur des tendons 17 est élargie sur le pourtour de l'entaille destinée à être insérée dans un bouton osseux 18.

Avantageusement, une épaisseur des tendons 17 est élargie sur le pourtour de l'entaille destinée à être insérée dans un bouton osseux 18.

Avantageusement, une épaisseur des tendons 17 est élargie sur le pourtour de l'entaille destinée à être insérée dans un bouton osseux 18.

### Les ligaments du SAP

En référence, entre autres, aux FIGURES 2 et 3, sont décrits les ligaments du SAP 10.

Tel que décrit précédemment, le SAP 10, contrairement au modèle physiologique considéré, ne comprend pas les ligaments appartenant aux éléments 1, 2 et 3.

Comme les tendons 17, les ligaments du SAP 10 sont réalisés en résine souple élastique. Selon le mode de réalisation non limitatif, la résine est une résine siliconée, présentant une dureté shore comprise entre 80 et 20. La résine utilisée selon le mode de réalisation non-limitatif présente une dureté de 50 Shore.

De manière avantageuse, les ligaments (pouvant être définis dans la présente demande comme des connecteurs interosseux) sont de forme cylindrique. Avantageusement, les ligaments sont élargis à leurs extrémités. Ainsi, la largeur de l'extrémité des ligaments (ou la largeur de la tête des ligaments) est supérieure aux trous osseux. Dans ce cas, lors du montage du SAP 10, les ligaments sont introduits en force dans les trous osseux. Cette caractéristique permet de solidariser efficacement les ligaments aux os.

Selon le mode de réalisation, les ligaments scapho-lunaire 20 et le luno-triquétral 21 différent des autres ligaments en ce qu'ils ne constituent pas ou ne forment pas un simple connecteur (cylindrique) entre deux os. En effet, le ligament scapho-lunaire 20 et, respectivement, le ligament luno-triquétral 21 comprennent, chacun, deux surfaces courbes de contact opposées 22, 23 agencées pour épouser les surfaces articulaires du scaphoïde (Sca) et du lunatum (Lun), et, respectivement, du lunatum (Lun) et du triquétrum (Tri).

Les ligaments scapho-lunaire 20 et luno-triquétral 21 comprenant chacun, en outre, deux tiges en saillie 24, 25 par rapport à chacune de leurs deux surfaces de contact respectives. Une extrémité 26, 27 de chacune des tiges est élargie. L'extrémité de chacune des tiges 26, 27 du ligament scapho-lunaire 20 et, respectivement, du ligament luno-triquétral 21 est agencée pour être insérée, en force, dans un trou osseux du scaphoïde (Sca) et du lunatum (Lun), et, respectivement, dans un trou osseux du lunatum (Lun) et du triquétrum (Tri).

Tel que décrit précédemment, les espaces scapho-lunaire et luno-triquétral, et donc les ligaments scapho-lunaire 20 et luno-triquétral 21, sont augmentés volontairement. Outre les effets précédemment décrits, les inventeurs ont observé que des ligaments scapho-lunaire 20 et luno-triquétral 21 reproduits conformément au modèle physiologique présentaient une fragilité lors de l'impression, de l'assemblage et de l'utilisation entrainant des ruptures. Il a été observé que l'utilisation de matériau plus résistant pour la conception des ligaments nuisait au ressenti et à la fidélité du rendu procuré par le SAP 10 à l'utilisateur lors de l'arthroscopie. Aussi, l'augmentation de l'épaisseur des ligaments scapho-lunaire 20 et luno-triquétral 21 procure une combinaison synergique d'effets permettant d'améliorer le ressenti et à la fidélité du rendu lors de l'arthroscopie et fournir un SAP 10 dont les ligaments sont suffisamment résistants aux manipulations.

Avantageusement, afin d'améliorer le ressenti et à la fidélité du rendu lors de l'arthroscopie, et contrairement aux autres ligaments du SAP 10, le ligament radio-scapho-capitate 1, radio-lunaire court 2, radio-lunaire long 4, radio-scapho-lunaire 3, ulno-lunaire 5 et ulno-triquétral 6 forment ou constituent ou sont agencés sous la forme d'une bandelette.

Le TFCC 7 comprend une tige en saillie par rapport à la surface articulaire de contact du TFCC 7 avec l'ulna 9. La tige du TFCC est agencée pour être insérée, en force, dans un trou osseux de l'ulna 9.

### La peau du SAP

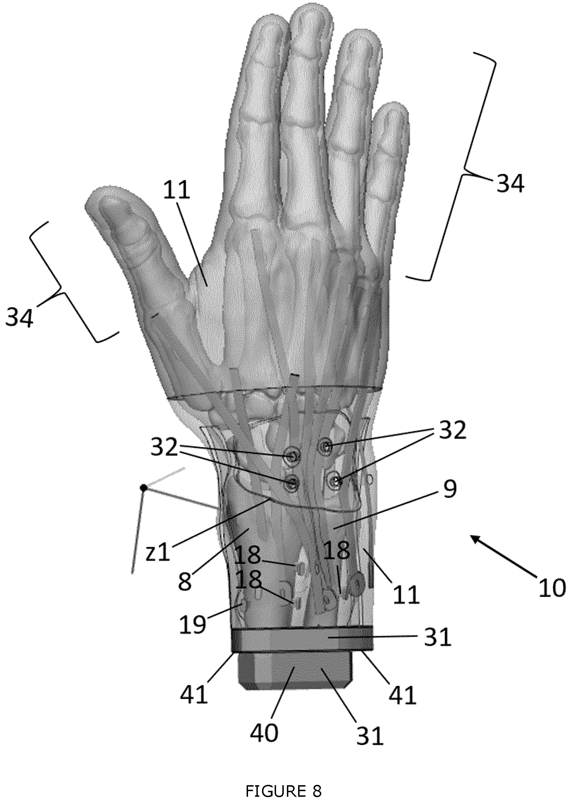

En référence, entre autres, aux FIGURES 8 à 11, il est décrit la peau 11 ou le revêtement cutanée 11 du SAP 10.

Selon le mode de réalisation, le revêtement cutané 11 est en résine flexible. Avantageusement, la peau 11 est opaque afin de cacher la position instruments lors des manipulations.

Selon le mode de réalisation non-limitatif, la résine flexible revêtement cutané 11 est du silicone présentant une dureté shore comprise entre 60 et 100. La résine flexible utilisée selon le mode de réalisation non-limitatif présente une dureté de 80 shore.

Le revêtement cutané est peut-être en résine opaque. Ainsi, l'intérêt pédagogique est amélioré en n'offrant pas la possibilité à l'expérimentateur expérimenté de localiser la position des instruments à travers le revêtement cutané 11.

Avantageusement, la peau 11 est constituée de deux pièces 111, 112. Cet aspect permet de faciliter le montage/démontage du SAP 10.

Une des pièces forme une partie distale 111 de la peau 11, s'étendant depuis les phalanges distales jusqu'aux os du métacarpe, et une partie proximale 112 de la peau 11, s'étendant depuis les os du métacarpe jusqu'à l'extrémité proximale du SAP 10.

Avantageusement, une jonction entre la partie distale 111 et la partie proximale 112 de la peau 11 est coronale et se situe au niveau des os du métacarpe. Cet aspect permet qu'aucune découpe ne soit positionnée au niveau de la zone d'intérêt (et en particulier au niveau des voies d'abord 32) (et donc que la jonction ne soit pas positionnée au niveau des voies d'abord 32). En outre, la localisation de la jonction permet d'introduire les autres éléments du SAP 10 facilement lors du montage. La connexion, la liaison ou l'attache des deux parties 111, 112 de la peau entre elles s'effectue au moyen de tout système d'accroche connu de l'homme du métier (connecteur réversible (de type clavette, goujon ou épingle) possiblement identique aux connecteurs utilisés pour d'autres connexion du SAP (à titre d'exemple purement indicatif : les connecteurs interosseux selon l'invention)).

Avantageusement, le revêtement cutané 11 est épaissi au regard des tendons 17 pour améliorer la durée de vie du SAP 10 (offrir un SAP 10 plus résistant aux manipulations et au transport) et diminuer le risque de rupture de la peau 11 durant l'arthroscopie. La peau 11 présente une épaisseur, noté e3, au des tendons 17, et en particulier au regard des tendons 17 extenseurs. A titre d'exemple indicatif, l'épaisseur e3 est compris entre 2 et 5mm selon le mode de réalisation non limitatif.

De manière avantageuse, la peau 11 présente une épaisseur, dite e1, sur une zone, dite z1, s'étendant entre les extrémités distales du radius 8 et de l'ulna 9, vers les styloïdes du radius 8 et de l'ulna 9 puis vers l'extrémité latérale du scaphoïde (Sca) et l'extrémité médiale du triquétrum (Tri) jusqu'à l'extrémité distale du capitulum (Cap).

L'épaisseur e1 permet d'offrir plus d'espace et une plus grande souplesse à l'exploration lors de l'arthroscopie. L'épaisseur e1 est avantageusement uniformément, à l'exception du pourtour des voies d'abord. A titre d'exemple non limitatif, l'épaisseur e1 est compris entre 2 et 4 mm.

Avantageusement, la peau 11 présente une épaisseur, dite e2, sur chaque pourtour de voies d'abord 32. Les voies d'abord 32 sont ménagées dans la peau du poignet dans la zone z1. Les voies d'abord sont renforcées en épaisseur afin de résister dans le temps aux manipulations répétées des instruments sur le revêtement cutané. Les voies d'abord 32 sont renforcées en épaisseur afin de résister dans le temps aux manipulations répétées des instruments sur le revêtement cutané. A titre d'exemple non limitatif, l'épaisseur e2 est de 3 mm selon le mode de réalisation.

Les voies d'abord 32 sont 3-4, 5-6, 6R, MCU et MCR. Les voies d'abord 32 sont de forme ronde avec un diamètre quasi équivalent à l'arthroscope utilisé pour l'arthroscopie. Le diamètre quasi équivalent de la voie d'abord à l'arthroscope et l'épaisseur de la peau 11 e1 dans la zone z1 permet de reproduire fidèlement les résistances des tissus mous à l'introduction de la caméra.

Tel que précédemment décrit, la peau 11 n'est pas en contact direct, au moins dans la zone z1, avec les tendons 17, les os du carpe, la partie distale de l'ulna 9 et la partie distale du radius 8. Contre intuitivement, et contrairement au modèle physiologique considéré, le montage, le ressenti et la fidélité du rendu procuré par le SAP 10 à l'utilisateur lors de l'arthroscopie sont amélioré par l'absence de contact entre la peau 11, d'une part, et les tendons 17, les os du carpe, la partie distale de l'ulna 9 et la partie distale du radius 8, d'autre part.

### Le socle du SAP

En référence, entre autres, aux FIGURES 8 à 11, il est décrit un socle 28 destiné à coopérer avec le SAP 10.

Le socle 28 est agencé pour recevoir et immobiliser, de manière réversible, le SAP 10. Autrement dit, le SAP 10 est agencé pour être monté et immobiliser, de manière réversible, sur le socle 28.

Le socle 28 comprend un système de fixation 29 agencé pour immobiliser le socle 28 sur un support. Le support, sur lequel est destiné à être immobilisé le socle 28, peut être tout type de support plan. Le système de fixation 29 permet d'empêcher la rotation du socle 28, en particulier dans tout plan perpendiculaire au support. Selon le mode de réalisation particulier non limitatif présenté, le système de fixation 29 est de type étau et comprend deux éléments en vis-à-vis (typiquement un mors mobile et un mors fixe agencés pour enserrer le support dans son épaisseur) agencés pour venir en prise et enserrer le support plan.

Selon le mode de réalisation particulier non limitatif illustré, le support comprend deux surfaces planes parallèles et une tranche, par exemple un plateau. Dans ce cas, le support peut être une table. Le système de fixation 29 comprend un élément de stabilisation 30 latéral agencé pour être en prise avec la tranche (ou une face latérale) du support et empêcher la rotation du socle 18 relativement au autour de tout axe perpendiculaire au plan du support (ou tout axe parallèle à la tranche). Selon le mode de réalisation, l'élément de stabilisation 30 comprend deux ailettes 30 agencées pour former, chacune, un angle non nul avec la face latérale du support de sorte que les extrémités distales de chaque ailette soient en prise avec la face latérale du support.

Avantageusement, il peut être fournit une pièce de liaison 31 agencée pour être fixée, de manière réversible, sur la partie proximale du SAP 10. Après montage de l'élément de liaison 31 sur le SAP 10, le SASP 10 est lié rigidement à l'élément de liaison 31. Avantageusement, la pièce de liaison 31 est agencée pour être montée et immobilisée sur la partie distale du radius 8 et/ou sur la partie distale de l'ulna 9.

La pièce de liaison 31 est, en outre, agencée pour être montée et fixée rigidement sur le socle 28 de manière réversible. Avantageusement, la pièce de liaison 31 est agencée pour collaborer réciproquement avec la partie distale 36 du socle 28.

La pièce de liaison 31 est agencée pour s'assembler rigidement, d'un côté, avec la partie proximale (le poignet) du SAP 10 et, de l'autre côté, avec la partie distale 36 du socle 28. Avantageusement, le montage se fait en force et permet de résister aux contraintes. A titre d'exemple, l'extrémité de la partie distale 36 du socle 28 peut comprendre une surface concave 37 et/ou une butée 38. A titre d'exemple, l'élément de liaison 31 peut comprendre un ergot 41 et/ou un appendice 40. Selon le mode de réalisation non limitatif, la surface concave 37 est agencée pour collaborer réciproquement avec l'ergot 41. L'ergot 41 est agencé pour être introduit dans la surface concave 37 et pour être porté en appui sur la butée 38.

Avantageusement, la partie distale 36 du socle 28 comprend un emplacement ou évidement 39. L'évidement 39 est agencée pour collaborer réciproquement avec l'appendice 40. L'appendice 40 est agencé pour être introduit dans l'évidement 39 et l'extrémité distale de l'appendice 40 est agencée pour collaborer et être portée en appui avec le culot ou le fond de l'évidement 39.

Avantageusement, l'ergot 41, de préférence le pourtour ou la géométrie de l'ergot 41, présente une forme similaire à la forme périphérique de la portion distale de la peau 11 de l'avant-bras pour soutenir la peau 11.

Selon une amélioration, l'élément de liaison 31 est en matériau ferromagnétique et la partie distale 36 du socle 28 comprend un emplacement ou évidement 39 destiné à recevoir un ou des aimants. Les aimants fournissent un supplément de rigidité à la liaison entre l'élément de liaison 31 (et donc le SAP 10) et le socle 28. Avantageusement, la pièce de liaison 31 est élargie à sa base afin d'éviter le glissement des parties molles liée à la pesanteur.

Avantageusement, le socle 28 comprend un moyen de réglage 35 de la position verticale du SAP 10 (et/ou de l'élément de liaison) de sorte à adapter la hauteur du SAP 10, et en particulier de la région d'intérêt (la zone z1) par rapport à la taille de l'utilisateur. Selon le mode de réalisation non limitatif présenté, le moyen de réglage 35 est un élément coulissant en translation de type glissière.

Bien sûr, l'invention n'est pas limitée aux exemples qui viennent d'être décrits et de nombreux aménagements peuvent être apportés à ces exemples sans sortir du cadre de l'invention.

En particulier toutes les variantes et tous les modes de réalisation décrits sont combinables entre eux si rien ne s'oppose à cette combinaison sur le plan technique.

## Revendications

1. Simulateur d'arthroscopie du poignet (SAP) (10), d'un modèle physiologique d'individus considéré, ledit SAP comprenant les éléments synthétiques suivants :
- les os de la main, du poignet, une partie distale du radius (8) et une partie distale de l'ulna (9),
- au moins une partie, des ligaments de la main et, au moins une partie, des ligaments du poignet,
- au moins une partie, des tendons (17) de la main et, au moins une partie, des tendons (17) du poignet,
- la peau (11) de la main, du poignet et, au moins une partie, de la peau (11) de l'avant-bras ;
l'espace médio-carpien (13) du SAP est augmenté, d'au moins 100%, en distance, par rapport au modèle physiologique considéré.

2. Simulateur d'arthroscopie du poignet (10) selon la revendication 1, dans lequel l'espace scapho-lunaire est augmenté d'au moins 50%, en distance, par rapport au modèle physiologique considéré.

3. Simulateur d'arthroscopie du poignet (10) selon la revendication 1 ou 2, dans lequel l'espace luno-triquétral est augmenté d'au moins 50%, en distance, par rapport au modèle physiologique considéré.

4. Simulateur d'arthroscopie du poignet (10) selon l'une quelconque des revendications précédentes, dans lequel l'espace radio-carpien (14) est augmenté d'au moins 50%, en distance, par rapport au modèle physiologique considéré.

5. Simulateur d'arthroscopie du poignet (10) selon l'une quelconque des revendications précédentes, dans lequel l'espace ulno-carpien (15) est augmenté d'au moins 50%, en distance, par rapport au modèle physiologique considéré.

6. Simulateur d'arthroscopie du poignet (10) selon la revendication précédente, dans lequel l'extrémité distale de l'ulna est rognée, par rapport au modèle physiologique considéré, pour créer un espace supplémentaire (16) entre l'ulna et la première rangée des os du carpe.

7. Simulateur d'arthroscopie du poignet (10) selon l'une quelconque des revendications précédentes, dans lequel :
- la partie distale du radius (8) et la partie distale de l'ulna (9) comprennent des plots (18) en saillie, formant des boutons osseux (18) ; une extrémité distale (19) de chaque plot constituant un ergot (19),
- des cavités ou évidements (33), formant des insertions tendineuses, ménagées dans les os du métacarpe ;
l'extrémité proximale de chaque tendon (17) comprend une entaille ou une ouverture agencée pour introduire, en force, chaque plot respectif, et
l'extrémité distale de chaque tendon (17) est agencée pour être insérée et immobilisée dans chaque cavité respective.

8. Simulateur d'arthroscopie du poignet (10) selon la revendication précédente, dans lequel les plots en saillie (18) et l'extrémité proximale des tendons (17) et/ou l'entaille des tendons sont agencés pour que, après introduction d'un tendon considéré dans son plot respectif, l'extrémité distale (19) de chaque plot soit en saillie, par rapport au tendon inséré, pour former une surface d'appui de la peau (11) de sorte à créer un espace entre :
- au moins une partie, des os du carpe, de la partie distale de l'ulna (9), de la partie distale du radius (8) et des tendons, et
- la peau.

9. Simulateur d'arthroscopie du poignet (10) selon l'une quelconque des revendications précédentes, dans lequel le ligament scapho-lunaire (20) et, respectivement, le ligament luno-triquétral (21) comprennent, chacun, deux surfaces de contact opposées (22, 23) agencées pour épouser les surfaces articulaires du scaphoïde (Sca) et du lunatum (Lun), et, respectivement, du lunatum (Lun) et du triquétrum (Tri).

10. Simulateur d'arthroscopie du poignet (10) selon l'une quelconque des revendications précédentes, dans lequel :
- les ligaments radio-carpiens comprennent le ligament radio-scapho-capitate (1), radio-lunaire court (2), radio-lunaire long (4), radio-scapho-lunaire (3), ulno-lunaire (5), ulno-triquétral (6) et le complexe fibrocartilagineux triangulaire ou ligament triangulaire (TFCC) (7),
- la première rangée des os du carpe, la partie distale de l'ulna (9) et la partie distale du radius (8) comprennent des encoches ou sillons dans lesquelles chacun des deux extrémités des ligaments radio-carpiens sont agencés pour être insérés et immobilisés.

11. Simulateur d'arthroscopie du poignet (10) selon l'une quelconque des revendications précédentes, dans lequel la peau (11) présente, entre autres :
- une épaisseur, dite e1, sur une zone, dite z1, s'étendant entre les extrémités distales du radius et de l'ulna, vers les styloïdes du radius et de l'ulna puis vers l'extrémité latérale du scaphoïde (Sca) et l'extrémité médiale du triquétrum (Tri) jusqu'à l'extrémité distale du capitulum (Cap),
- une épaisseur, dite e2, sur chaque pourtour de voies d'abord (32), lesdites voies d'abord étant ménagées dans la peau du poignet dans la zone z1,
- une épaisseur, dite e3, au regard des tendons 17 extenseurs.

12. Simulateur d'arthroscopie du poignet (10) selon l'une quelconque des revendications précédentes, comprenant un socle (28) agencé pour coopérer avec le SAP de sorte à recevoir et immobiliser, de manière réversible, le SAP ; ledit socle comprend, en outre, un système de fixation (29) agencé pour immobiliser ledit socle sur un support, ledit système de fixation comprend un élément de stabilisation (30) agencé pour être en prise avec une tranche du support et empêcher la rotation dudit socle.

13. Simulateur d'arthroscopie du poignet (10) selon la revendication précédente, comprenant une pièce de liaison (31) agencée pour être fixée, de manière réversible, sur la partie distale du radius (8) et/ou sur la partie distale de l'ulna (9) ; ladite pièce de liaison est agencée pour être montée sur le socle (28) de manière réversible.

14. Simulateur d'arthroscopie du poignet (10) selon l'une quelconque des revendications précédentes, dans lequel la partie distale du radius (8) et la partie distale de l'ulna (9), le triquétrum (Tri) et le pisiforme (Pis), les os de la 2^{e} rangée du carpe, les métacarpes et les phalanges (34) de chaque doigt long sont connectés rigidement entre eux sans articulation.

15. Simulateur d'arthroscopie du poignet (10) selon l'une quelconque des revendications précédentes, dans lequel la peau (11) comprend deux pièces, une partie distale (111), s'étendant depuis les phalanges distales jusqu'aux os du métacarpe, et une partie proximale (112), s'étendant depuis les os du métacarpe jusqu'à l'extrémité proximale du SAP ; une jonction entre la partie distale et la partie proximale de la peau est coronale et se situe au niveau des os du métacarpe.
